(19) Europäisches Patentamt
European Patent Office
Office européen des brevets

(11) **EP 4 468 703 B1**

(12) **EUROPEAN PATENT SPECIFICATION**

(45) Date of publication and mention
of the grant of the patent:
**21.01.2026 Bulletin 2026/04**

(21) Application number: **23175423.5**

(22) Date of filing: **25.05.2023**

(51) International Patent Classification (IPC):
*H04N 19/17* (2014.01)        *H04N 19/18* (2014.01)
*H04N 19/187* (2014.01)

(52) Cooperative Patent Classification (CPC):
**H04N 19/17; H04N 19/18; H04N 19/187**

(54) **ENHANCEMENT VIDEO CODING  FOR VIDEO MONITORING APPLICATIONS**

ERWEITERTE VIDEOCODIERUNG FÜR VIDEOÜBERWACHUNGSANWENDUNGEN

CODAGE VIDÉO D'AMÉLIORATION POUR DES APPLICATIONS DE SURVEILLANCE VIDÉO

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**27.11.2024 Bulletin 2024/48**

(73) Proprietor: **Axis AB
223 69 Lund (SE)**

(72) Inventors:
• **Johansson, Malte
223 69 LUND (SE)**
• **Edpalm, Viktor
223 69 LUND (SE)**

(74) Representative: **AWA Sweden AB
Box 5117
200 71 Malmö (SE)**

(56) References cited:
**WO-A1-2020/188273     WO-A1-2022/189806**

• BATTISTA STEFANO ET AL: "Overview of the
**Low Complexity Enhancement Video Coding
(LCEVC) Standard", IEEE TRANSACTIONS ON
CIRCUITS AND SYSTEMS FOR VIDEO
TECHNOLOGY, IEEE, USA, vol. 32, no. 11, 11
June 2022 (2022-06-11), pages 7983 - 7995,
XP011925493, ISSN: 1051-8215, [retrieved on
20220613], DOI: 10.1109/TCSVT.2022.3182793**

## Description

### TECHNICAL FIELD

The present disclosure relates to the field of video coding and in particular to an implementation of enhancement video coding suitable for video monitoring applications.

### BACKGROUND

Enhancement video coding refers to techniques for adding one or more enhancement layers to a base video encoded with a base codec, such that an enhanced video stream is produced when the enhancement layers are combined with the reconstructed base video. The enhancement layers provide improved features to existing codecs, such as compression capability extension, lower encoding/decoding complexity, improved resolution and improved quality of the reconstructed video. The combination of the base video and the enhancement layer or layers may be referred to as a hybrid video stream.

Among such techniques, the Low Complexity Enhancement Video Coding (LCEVC) specification, or MPEG-5, is a recent standard approved by the ISO/IEC JTC1/SC29/WG04 (MPEG) Video Coding. It works on top of other coding schemes, resulting in a multi-layer video coding technology, and adds the enhancement layer(s) independently from the base video. The LCEVC technology takes as input the decoded video at lower resolution and adds - based on a comparison with the input video at original quality - up to two enhancement sublayers of residuals encoded with specialized low-complexity coding tools, such as simple temporal prediction, frequency transform, quantization, and entropy encoding. A presentation of the main features of the LCEVC standard can be found in any of the following references:

[1] S. Battista et al., "Overview of the Low Complexity Enhancement Video Coding (LCEVC) Standard", IEEE Transactions on Circuits and Systems for Video Technology, vol. 32, no. 11, pp. 7983-7995 (DOI: 10.1109/TCSVT.2022.3182793), 2022

[2] "White paper on Low Complexity Enhancement Video Coding (LCEVC)", ISO/IEC JTC1/SC29/AG3 N0058, January 2022

[3] WO2020188273A1
The LCEVC standard specification is published as

[4] ISO/IEC 23094-2-Information Technology-General Video Coding-Part 2: Low Complexity Enhancement Video Coding, Standard ISO/IEC 23094-2:2021, November 2021

[5] ISO/IEC 23094-3-Information Technology-General Video Coding-Part 3: Conformance and Reference Software for Low Complexity Enhancement Video Coding, Standard ISO/IEC 23094-3:2021, 2022

The design of LCEVC foresees up to two sublayers of enhancement to a base-layer compressed video representation. The first layer (sublayer 1) is optional and can be disabled by corresponding signaling in the LCEVC bitstream, while the second layer (sublayer 2) is mandatory. Unlike the first layer, the second layer includes a temporal prediction stage, which attempts to predict each block of residuals based on buffered values, or otherwise to encode the block without temporal prediction. For a given block, the decision to use temporal prediction or not may be different for different video frames. When LCEVC is operated with two sublayers, therefore, a significant part of the enhancement data will be encoded in sublayer 1 without temporal prediction. Experience appears to confirm that the coding efficiency of two-layer LCEVC is relatively poor for video data that has a strong time correlation locally, which is characteristic of data acquired in video monitoring applications. It would be desirable to improve the data compression in such episodes where the video data has a strong time correlation generally, or where a strong time correlation can be observed when a region of each frame is considered.

### SUMMARY

One objective of the present disclosure is to propose enhancement video coding techniques with an ability to identify episodes where the video data has a strong time correlation and to make use of the time correlation for improving various performance aspects, such as coding efficiency, data compression efficiency or any of the quality metrics discussed in [1]. The better coding efficiency, the lower bitrate is needed to reach a certain video quality level. Another objective is to propose enhancement video coding techniques which can utilize a time correlation that is confined to a region of each frame of the input video (localized time correlation). A further objective is to improve the performance of two-layer LCEVC in respect of video data with a strong localized time correlation. A further objective is to adapt LCEVC for video monitoring applications specifically. A still further objective is to propose such adaptations which interfere minimally with the existing LCEVC design.

At least some of these objectives are achieved by the invention as defined by the independent claims. The dependent claims relate to advantageous embodiments.

In accordance with a first aspect of the present disclosure, there is provided a method of encoding an input video including a sequence of video frames as a hybrid video stream. The method comprises: downsampling the input video from an original spatial resolution to a reduced spatial resolution and an intermediate spatial resolution; providing the input video at the reduced spatial resolution to a base encoder to obtain a base encoded stream; providing a first enhancement stream by generating a set of first residuals based on a difference between the input video and a reconstructed video at the intermediate spatial resolution (e.g., the reconstructed video may have been obtained by decoding the base encoded stream and upsampling the output), quantizing the set of first residuals, and forming the first enhancement stream from the set of quantized first residuals; providing a second enhancement stream by generating a set of second residuals based on a difference between the input video and a reconstructed video at the original spatial resolution (e.g., starting from the reconstructed video at the intermediate spatial resolution, the reconstructed video at the original spatial resolution may have been obtained by adding a reconstruction of the first residuals and upsampling the output), quantizing the set of second residuals, and forming the second enhancement stream from the set of quantized second residuals; and forming the hybrid video stream from the base encoded stream, the first enhancement stream and the second enhancement stream. The second enhancement stream is at least partially encoded using temporal prediction (i.e., at least some blocks, some frames or some time segments are encoded using temporal prediction) and further comprises temporal signaling indicating whether temporal prediction is used. According to the first aspect, the method further comprises: detecting at least one non-motion region in a video frame; and causing the set of first residuals to vanish throughout the non-motion region. The set of second residuals is not caused to vanish in the non-motion region.

An advantage associated with the first aspect of the present disclosure is that the first enhancement stream will be substantially free from data relating to the non-motion region. More precisely, the inventors have realized that the poor coding efficiency of two-layer LCEVC when applied to video data with a strong localized time correlation is due, for the most part, to the first enhancement layer. The first enhancement stream is encoded without temporal prediction and is therefore unlikely to be the optimal coding vehicle for an input video with strong time correlation. Instead, substantially all of the enhancement coding of the non-motion region will be carried out by means of the second enhancement stream (sublayer 2 in the LCEVC standard), where temporal prediction is available. A further advantage with the first aspect of the present disclosure is that no modification is required on the decoding side. The decoder can properly decode a hybrid video stream without knowing that it was prepared using the teachings disclosed herein.

In the terminology of the present disclosure, the set of first residuals is said to "vanish" throughout the non-motion region if their values are zero or approximately equal to zero here. An acceptable deviation from exact zero could correspond to coding artefacts related to the base encoder, upsampling/downsampling artefacts, signal noise, and similar contributions which are normally outside the influence of the entity executing the method. A number of different measures that can be taken in order to achieve such vanishing will be presented below. However, it is understood that the implementations of the method will normally have a finite granularity, such as a $2\times2$ or $4\times4$ pixel block structure, which means that a block of residuals generally cannot be caused to vanish unless it lies entirely in the non-motion region. Within the scope of the present disclosure, therefore, it is not necessary for a block of residuals which overlaps just partially with the non-motion region to vanish entirely. With respect to implementations where the first residuals are transform coefficients (e.g., a block of residuals is generated by applying a transform kernel to a block of pixel-wise differences between the input video and the reconstructed video), it is appreciated furthermore that the coefficient block generally cannot vanish by action of the measures disclosed herein, unless the underlying pixel block is completely located in the non-motion region. In each of these examples, even an incomplete vanishing of the set of first residuals will achieve the aimed-for effect that substantially all of the enhancement coding of the non-motion region will be carried out by means of the second enhancement stream.

In a first group of embodiments, the set of first residuals vanish throughout the non-motion region as a result of masking applied to the set of quantized first residuals. Masking may include replacing those quantized first residuals which relate to the non-motion region with zero or neutral values.

In a second group of embodiments, the set of first residuals vanish throughout the non-motion region as a result of replacing the input video at the intermediate spatial resolution with substitute video which has been upsampled from the input video at the reduced spatial resolution (which is available from the step of downsampling the input video). This replacing is restricted to the non-motion region, and the input video is substantially intact elsewhere. The input video that has undergone local replacement with the downsampled-upsampled video data shall be used - rather than the once downsampled input video - for generating the set of first residuals, namely, for computing the difference relative to the reconstructed video at the intermediate spatial resolution. Because of the downsampling-upsampling operation, the input video should normally have a significantly better agreement with the reconstructed video in the non-motion region, so that the set of first residuals vanishes; the first residuals may contain a quality-enhancement component to make up for the data compression in the base encoder, but they should normally be free from resolution enhancement. Explained in alternative words, the replacement with downsampled-upsampled video data decreases the information content in the non-motion region of the input video (while the spatial resolution is nominally kept equal to the intermediate spatial resolution), whereby it can no longer cause any enhancement to the reconstructed video. Instead, the enhancement of the reconstructed video in the non-motion region is substantially deferred to the second layer.

In a third group of embodiments, the set of first residuals vanish throughout the non-motion region as a result of applying masking to the difference between the input video and a reconstructed video at the intermediate spatial resolution or of applying masking to the set of first residuals prior to the quantizing of the set of first residuals. In particular, masking can be applied to such first residuals which are transform coefficients. Again, masking may apply replacing those first residuals which relate to the non-motion region with zero or neutral values.

In a fourth group of embodiments, the set of first residuals vanish throughout the non-motion region as a result of subtracting from the input video, prior to generating the set of first residuals, a predicted difference between the input video and the reconstructed video at the intermediate spatial resolution. This subtraction is restricted to the non-motion region, whereas the input video is substantially intact elsewhere. The input video that has undergone local subtraction with the predicted difference shall be used - rather than the once downsampled input video - for generating the set of first residuals, namely, for computing the difference relative to the reconstructed video at the intermediate spatial resolution.

In a second aspect of the present disclosure, there is provided a device and a computer program for carrying out the method of the first aspect. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

## BRIEF DESCRIPTION OF THE DRAWINGS

Aspects and embodiments are now described, by way of example, with reference to the accompanying drawings, on which:

figure 1A shows, in terms of functional blocks, an architecture of an LCEVC encoder;

figures 1B and 1C are two examples of an inner functional structure of a temporal-prediction block in of the LCEVC encoder;

figure 2 shows an architecture of an LCEVC decoder;

figure 3 illustrates an LCEVC encoder adapted in accordance with the first group of embodiments herein;

figure 4 illustrates an LCEVC encoder adapted in accordance with the second group of embodiments herein;

figure 5A illustrates an LCEVC encoder adapted in accordance with the third group of embodiments herein;

figure 5B illustrates an LCEVC encoder adapted in accordance with the fourth group of embodiments herein;

figure 6 is a flowchart of a method of encoding an input video as a hybrid video stream, according to embodiments herein;

figure 7 is an example video frame acquired by a video monitoring camera in an urban environment;

figure 8 shows a codec device suitable for performing the method of figure 6; and

figure 9 shows a plurality of codec devices connected by a local-area network and/or a wide-area network.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

### System overview

Those skilled in the art can acquire a background understanding of the general category of enhancement coding technologies that the present disclosure seeks to improve and adapt from the initially cited references [1], [2] and [3], which relate to the LCEVC standard.

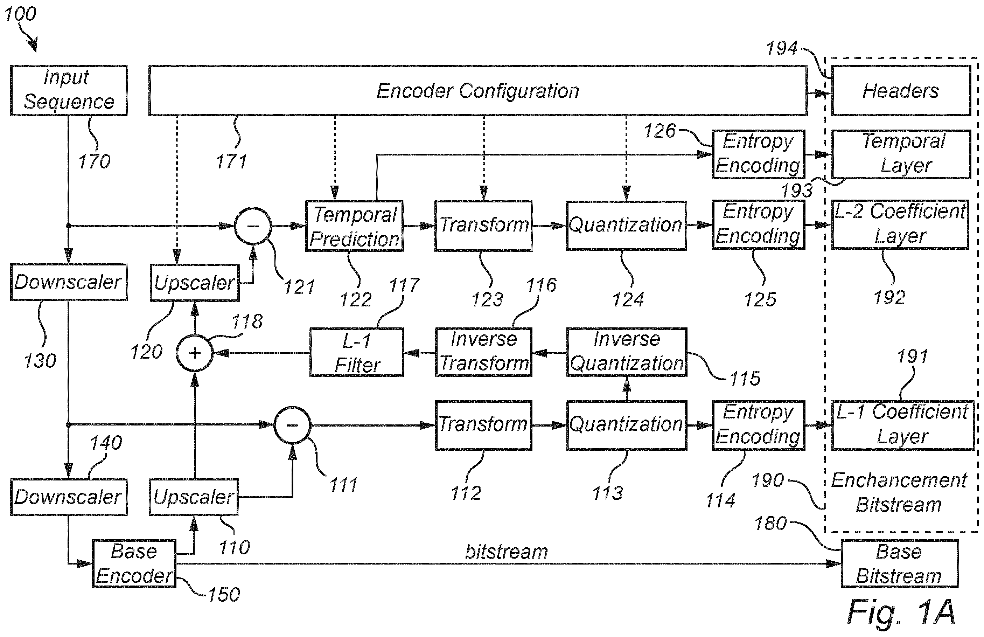

Figure 1A shows, in block diagram form, an LCEVC encoder 100 which is configured to process a video input sequence 170 into a hybrid video stream comprising a base bitstream 180 and an enhancement bitstream 190. The hybrid video stream may be used to facilitate digital transmission of the input sequence 170 to a recipient or for storage thereof. The base bitstream 180 is a coded representation, which is provided by an arbitrary base encoder 150, of a twice downsampled version of the input sequence 170, which is the output from downscalers 130, 140. The base encoder 150, which is not specified in LCEVC, may be configured for Advanced Video Coding (AVC), High-Efficiency Video Coding (HEVC), Essential Video Coding (EVC), Versatile Video Coding (WC), AOMedia Video 1 (AV1) or the like.

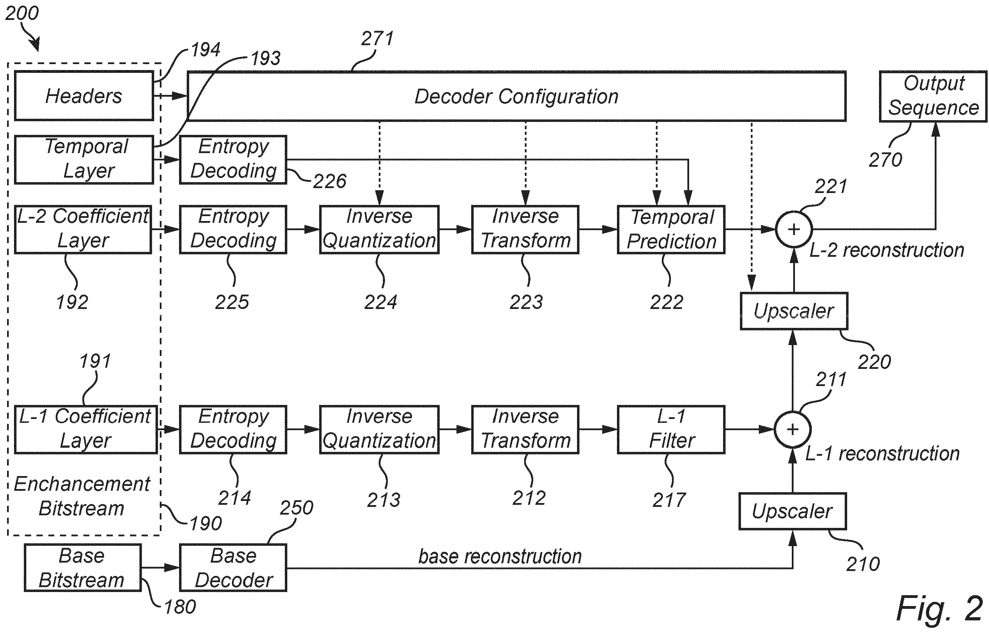

The enhancement bitstream 190 contains a L-1 (sublayer 1) coefficient layer 191 on the one hand, and a L-2 (sublayer 2) coefficient layer 192 and an associated temporal layer 193 on the other hand. Additionally the enhancement bitstream 190 may contain headers 194, from which a recipient of the hybrid bitstream may - in the interest of correct decoding - obtain information about the encoder configuration 171 that was in force when the hybrid bitstream was prepared. The encoder configuration 171 may affect any of the components of the encoder 100. In the standardized LCEVC encoder 100, sublayer 1 is optional and sublayer 2 is mandatory. The serial upscalers 110, 120 upsample a reconstructed version of the base bitstream 180. The reconstructed version of the base bitstream 180 may be obtained by decoding the output of the base encoder 150 (using base decoder 250 in figure 2). Alternatively, if the base encoder 150 is configured for inter-frame predictive coding, at least parts of the reconstructed version may be taken from a reference buffer of the base encoder 150. The upscalers 110, 120 are active regardless of whether sublayer 1 is active.

When sublayer 1 is active, a subtractor 111, a transform block 112, a quantization block 113 and an entropy coding block 114 operate to provide the L-1 coefficient layer 191. The subtractor 111 computes a difference between the input video which has the intermediate spatial resolution (after downsampling) and a reconstructed video which has the intermediate spatial resolution (after upsampling). Further, an inverse quantization 115 block, an inverse transform block 116, an L-1 filter (e.g., deblocking filter) 117 and an adder 118 are active to prepare the processing in sublayer 2, namely by mimicking the action of the first enhancement layer at the decoding side. The total action of these blocks 115, 116, 117, 118 is to add a reconstruction of the first residuals to the reconstructed video at the intermediate spatial resolution.

Within sublayer 2, a subtractor 121, a transform block 123, a quantization block 124 and an entropy coding block 125 operate to provide the L-2 coefficient layer 192. The subtractor 121 computes a difference between the input video at the original spatial resolution and a reconstructed video at the original spatial resolution, which is obtained by adding a reconstruction of the first residuals to the reconstructed video at the intermediate spatial resolution and upsampling the sum to the original spatial resolution. The quantization block 124 may apply an equal level of quantization as the quantization block 113, or a different level of quantization.

Still within sublayer 2, there are provided a temporal prediction block 122, which outputs data to the transform block 123 and outputs temporal signaling to an entropy coding block 126. The entropy coding block 126 is configured for entropy-encoding said temporal signaling as the temporal layer 193. Alternatively, the entropy coding blocks 125, 126 can be implemented as a single block (not shown). The single block may perform two parallel entropy-coding processes - one on the output of the quantization block 124 and one on the temporal signaling - or a single entropy-coding process, which operates on a multiplexed stream of the output of the quantization block 124 and the temporal signaling. Within sublayer 1, there is no temporal prediction but each video frame of the first enhancement stream is decodable without reference to any other video frame of the first enhancement stream.

The respective downsampling actions of the first and second downscalers 130, 140 can be chosen independently. In conventional implementations of LCEVC, the action of the first downscaler 130 is inverse to that of the second upscaler 120, and the action of the second downscaler 140 is inverse to that of the first upscaler 110.

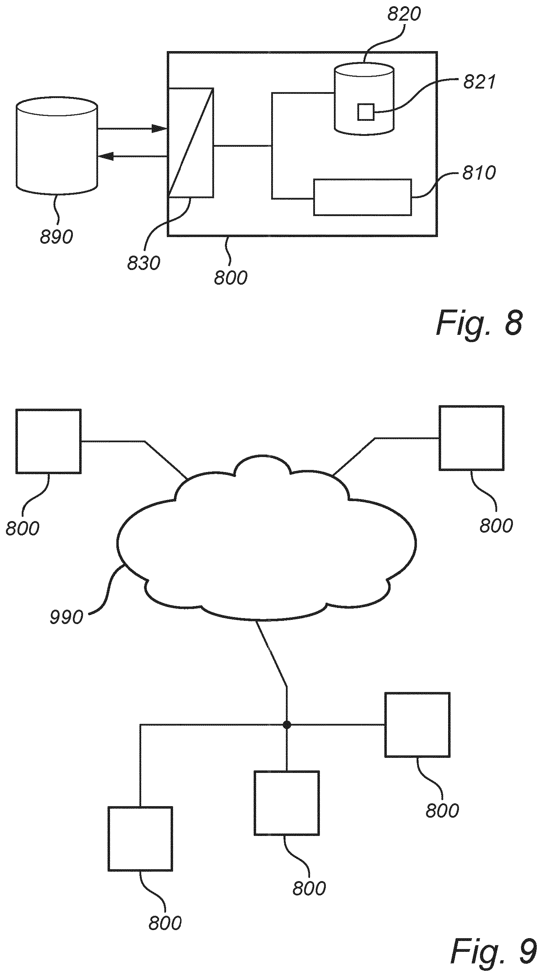

In LCEVC implementations, the transform blocks 112, 123 operate on blocks of 2×2 pixels or 4×4 pixels at the respective spatial resolution. An example transform kernel *DT* suitable for being applied by the transform blocks 112, 123 is given by equation 8 and figure 8 in [1]. The transform kernel *DT* will be referred to in this disclosure as an LCEVC transform kernel. The temporal prediction block 122 is configured to decide whether to use temporal prediction on a transform block basis, i.e., 2×2 pixels or 4×4 pixels at the respective spatial resolution. Additionally, an entire block (tile) of 32×32 residuals can be signaled to be encoded without temporal prediction, so that the temporal signaling's 193 contribution to the total signaling overhead for a fast-moving subsequence of video frames can be marginally reduced.

In LCEVC and some further developments thereof, the temporal prediction may act on the level of:

a) the difference between the input video and a reconstructed video which has been processed (e.g., upsampled) to have the original spatial resolution,

b) coefficients obtained by applying a transform kernel to the difference,

c) a quantized difference, or

d) quantized coefficients.

Under option a), for example, it is decided with a suitable temporal and spatial granularity - e.g. for each predefined pixel/coefficient block in each video frame - whether the difference is to be explicitly encoded or whether the difference is to be encoded by temporal prediction. That is to say, it is decided whether the difference is to be explicitly encoded or expressed as a copy of the corresponding difference in another video frame (or possibly expressed as a linear combination of the corresponding difference in one or more other video frames).

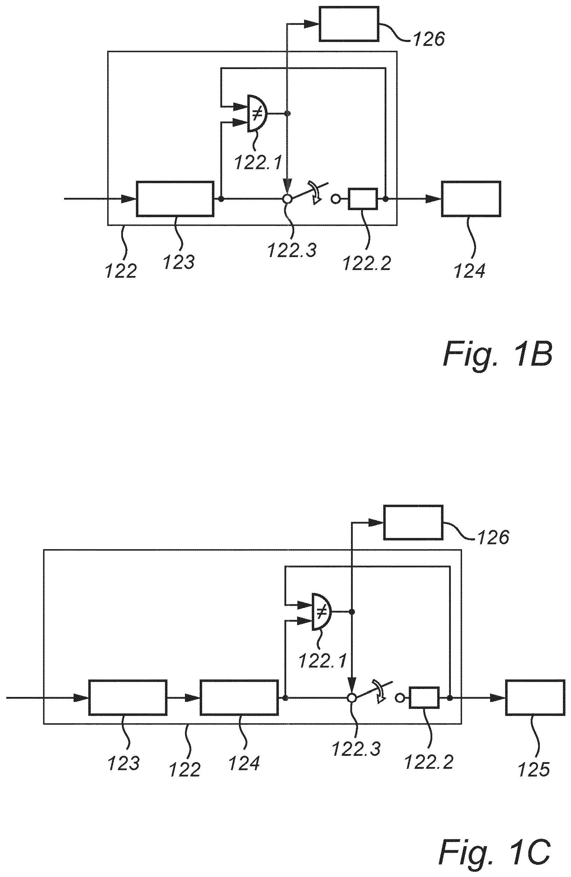

Figure 1B illustrates, in one example, the inner workings of a temporal-prediction 122 block of the LCEVC encoder 100 which is suitable for implementing option b). For now attention is directed to a particular coefficient block (e.g., corresponding to a particular coefficient block index or to a particular group of pixels) in a sequence of video frames. The temporal-prediction 122 block comprises a memory 122.2 for storing the values of the particular coefficient block for the most recent video frame in which the particular coefficient block was explicitly encoded. It is noted that the most recent video frame in this sense may be several frames earlier in the frame sequence of the input video; if a non-motion region remains for a long time, a considerable number of consecutive frames can be temporally predicted. In further developments, the number of consecutive frames which are allowed to be temporally predicted can be limited by a preconfigured threshold. In still further developments, the temporal prediction can occur by reference not only to one frame but to a plurality of frames.

To decide whether the particular coefficient block shall be explicitly encoded in a new video frame, a comparator 122.1 makes a comparison with the content of the memory 122.2. If the particular coefficient block in a new video frame differs from the content of the memory 122.2 more than a threshold, it is decided to encode the particular coefficient block in the new video frame explicitly. This may be achieved by closing the switch 122.3, whereby the particular coefficient block in the new video frame replaces the content of the memory 122.2 and is fed to the quantization block 124. If the particular coefficient block in a new video frame differs from the content of the memory 122.2 less than the threshold, the particular coefficient block in the new video frame is encoded by reference to one or more other frames, that is, by temporal prediction. The signal from the comparator 122.1 is used to control the switch 122.3 and is also output as temporal signaling, which serves as documentation of the temporal prediction decision. The sequence of temporal signaling may be subjected to entropy encoding (block 126) before being included in the enhancement bitstream 190. The difference between the particular coefficient block in the new video frame and the content of the memory 122.2 may be compared in terms of an $\ell^p$ norm for some $p \geq 1$.

Figure 1C refers to the temporal-prediction block 122 in another example, where option d) is implemented. Here, the quantization block 124 is arranged immediately downstream of the transform block 123. Consequently, the main output of the temporal-prediction block 122 is fed to the entropy coding block 125.

To implement option a), a modified version of the temporal-prediction 122 block shown in figure 1B may be used. The modification consists in moving the transform block 123 to a point just upstream of the quantization block 124. In embodiments where the second residuals are equal to the pixel-value difference (rather than being transform coefficients), the transform block 123 can be omitted altogether from the encoder 100.

Conceptually, the temporal-prediction block 122 has one copy of the comparator 122.1, memory 122.2 and switch 122.3 for each particular pixel/coefficient block of a video frame, to allow independent decision-making concerning temporal prediction for each of these pixel/coefficient blocks. It is recalled that the components shown in figures 1B and 1C do not necessarily reflect how a hardware structure of the encoder implementation; rather, software instructions may be used to carry out the necessary operations.

Figure 2 illustrates an LCEVC decoder 200, which is configured to process a hybrid video stream comprising a base bitstream 180 and an enhancement bitstream 190 into a video output sequence 270. The LCEVC decoder 200 includes a base decoding stage and corrections in enhancement sublayers 1 and 2. The base decoder 250 is responsible for decoding the base bitstream 180. The entropy decoding block 214, inverse quantization block 213, inverse transform block 212, L-1 filter 217 and adder 211 operate to perform sublayer 1 processing. The entropy decoding blocks 225, 226, inverse quantization block 224, inverse transform block 223, temporal prediction (reconstruction) block 222 and adder 221 belong to sublayer 2. These blocks are implemented with corresponding or inverse tools as described with reference to figure 1A and/or in reference [1]. In particular, an example inverse transform kernel *IT* suitable for being applied by the inverse transform blocks 212, 223 is given by equation 10 and figure 9 in [1]. From the recipient's point of view, at least part of the applicable decoder configuration 271 can be derived from the headers 194 in the enhancement bitstream 190. It is notable that no downscalers are needed in the decoder 200.

Thanks to the improvements made possible by the enhancement bitstream 190, the output sequence 270 may be expected to match the input video sequence 170 (figure 1A) more accurately and/or be of higher perceived quality than if the base reconstruction from the base decoder 250 had been used unchanged.

In a color input video, each pixel has multiple channels referring to a color space, including spaces based on primary colors (e.g., RGB) or lightness and chroma (e.g., YCbCr). Enhancement coding schemes including LCEVC described in this subsection can be applied to a grayscale input video as well as color input video. In the case of color input video, each channel can be enhancement-coded separately, or the three channels can be enhancement-coded together, in a joint manner. Whether to encode the three color channels separately or jointly can be identical to the design choice used in the base encoder 150, or it can be the opposite. Likewise, the improvements on existing enhancement coding schemes including LCEVC, which are to be described in the following subsections, are applicable regardless of whether the baseline enhancement coding scheme processes the color channels separately or jointly.

In figures 1 and 2, the functional blocks do not necessarily reflect the hardware or software structure of the device or devices which implement the LCEVC encoder 100 and decoder 200, respectively. In implementations, one functional block may be implemented by multiple discernable hardware components, and multiple functional blocks may be implemented in a common hardware component. Similarly, if software instructions (one or more computer programs) are used to implement the LCEVC encoder 100 or decoder 200, the software code may be structured into functions, routines, libraries etc. in any manner that the implementer considers suitable.

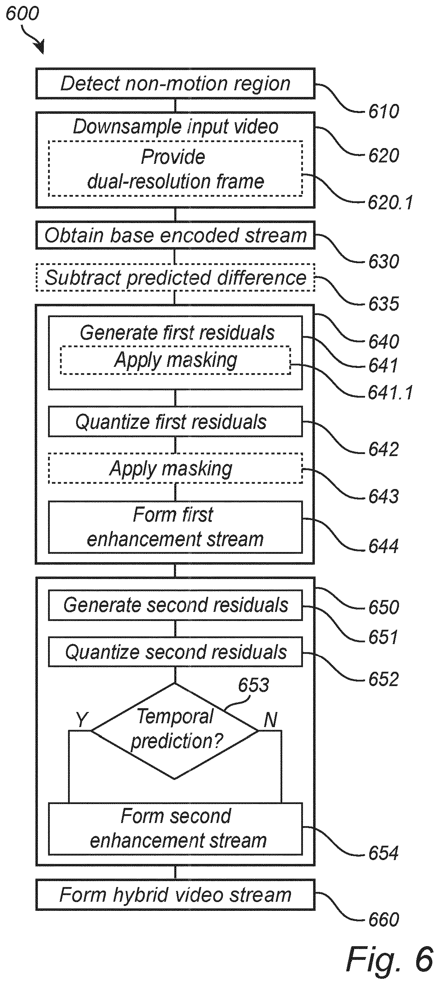

Figure 8 illustrates a codec device 800 which is suitable for implementing an LCEVC encoder 100 or decoder 200, or for performing the encoding method 600 to be described with reference to figure 6. As illustrated, the codec device 800 includes processing circuitry 810, memory 820 and an external interface 830. The processing circuitry 810 may include one or more processing cores, which are co-located or spatially distributed over several sites. The processing circuitry 810 may include one or more networked (or 'cloud') processing resources. The memory 820 may be suitable for storing a computer program 821 with software instructions. The external interface 830 may be a communication interface allowing the codec device 800 to communicate with an analogous device (not shown) held by a recipient of the hybrid video stream, or it may allow read and write operations in an external memory 890 suitable for storing hybrid video streams. The codec device 800 may be included in or associated with a digital video camera (not shown). The digital video camera may be adapted for video monitoring applications, including video surveillance.

Figure 9 illustrates a deployment allowing a hybrid video stream to be exchanged among a group of codec devices 800. It is noted that the device performing the encoding method 600 may be connected to the recipient device over a local-area network (connection lines in lower half of figure 9) or over a wide-area network 990. In a video monitoring application, a remote operator terminal may be the recipient of the hybrid video stream prepared by the codec device 800. The hybrid video stream can be protected from unauthorized tampering and/or eavesdropping by per se known encryption and signing technologies. This may be particularly relevant when the video stream is to be transferred over a network.

## First group of embodiments

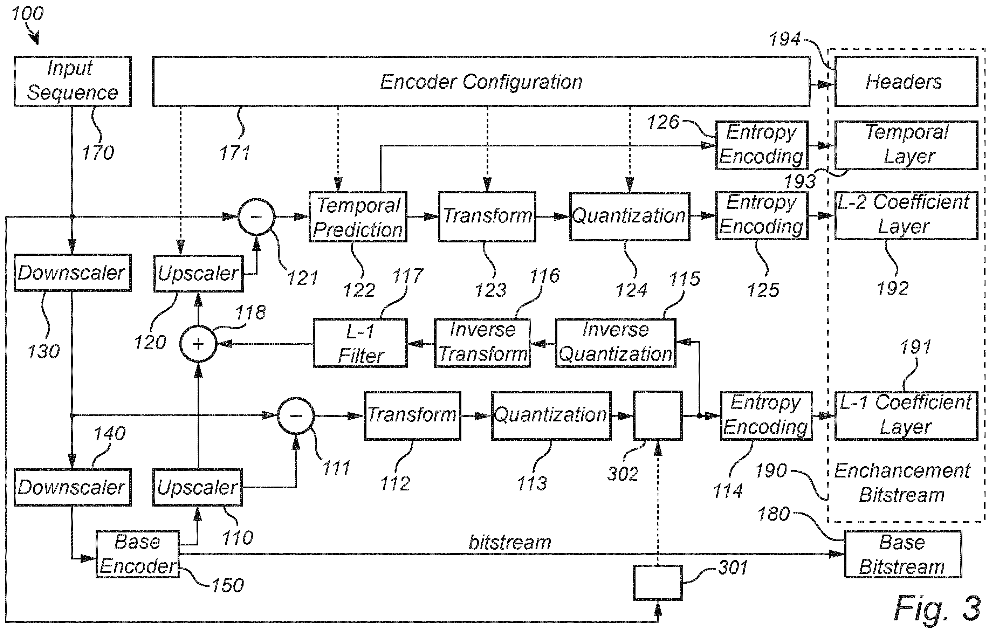

Figure 6 illustrates in flowchart form a method 600 of encoding an input video as a hybrid video stream according to embodiments within the first, second, third and fourth groups. The present subsection will be concerned mainly with the first group of embodiments and can be read in conjunction with figure 3.

It is noted that the encoding method 600 is not limited to the LCEVC context outlined in the previous subsection, but can be implemented without complying fully with the LCEVC specification. For example, the first residuals, which are based on a difference (on pixel-value level) between the input video and a reconstructed video at the intermediate spatial resolution, can in some embodiments be equal to this difference. This means the sublayer-1 transform block 112 in figure 3 is absent or inactive. In other embodiments, the first residuals are transform coefficients which have been obtained by applying a transform kernel to said difference. Full compliance with the LCEVC specification requires, among others, that the first residuals be transform coefficients and that the applied transform kernel be identical to the one described in [1].

Likewise, without departing from the scope of the present disclosure, the encoding method 600 can be generalized to provide a different number of enhancement layers than merely two. For example, the hybrid video stream output by the encoding method 600 could include a third, fourth etc. enhancement stream. Each of the additional enhancement streams can be generated by analogous components or operations as those used for the first or second enhancement stream, and the decoding may proceed along the lines described above.

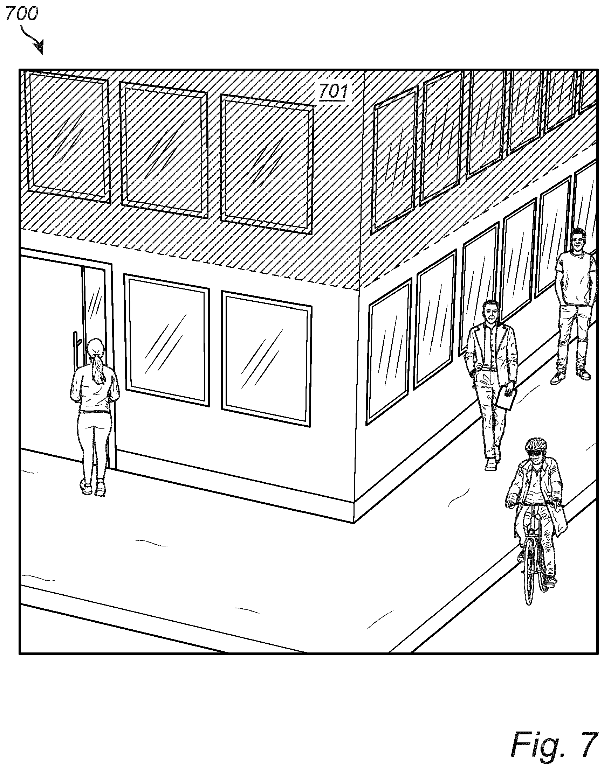

In a first step 610 of the method 600, at least one non-motion region is detected in a video frame (block 301 in figure 3). To illustrate such detection, figure 7 shows an example video frame 700 from a street scene with pedestrians and a cyclist, as captured by video monitoring equipment in a built environment. In the upper portion of the video frame 700, a detected, irregularly shaped non-motion region 701 is indicated by dashed boundary lines and by hashing. Everyday experience appears to confirm that the non-motion region 701 has been correctly detected, as it depicts an area of a façade which is out of reach of pedestrians and cyclists and thus very rarely visited by moving objects.

The non-motion region 701 can be detected based on configuration data input by an operator, or it may be automatically detected. An automatic detection algorithm deployed for this purpose may have a spatial granularity of at least $16 \times 16$ pixels, wherein the values of such pixel blocks are compared across successive video frames to determine whether movement is absent (pixel values are roughly constant) or present (pixel values vary). The automatic detection algorithm may include a computation of the pixel-value variance. Alternatively, the automatic detection algorithm may use a finer granularity, down to individual pixels. In embodiments where the first residuals are generated by applying a transform kernel of a certain size, it is preferable to perform the automatic detection with an granularity equal to the kernel size or a coarser granularity. Further, the automatic detection algorithm may have a temporal granularity corresponding to the duration of one video frame or the duration of ten video frames or the duration of several tens of video frames. Using a coarser granularity usually means that the detection algorithm consumes less processing resources; in video monitoring applications, the non-motion periods may have a duration of minutes or even hours, and so it may be sufficient to refresh the detection of non-motion regions with a corresponding granularity, that is, of the order of hundreds or thousands of video frames.

Another automatic detection algorithm may rely on a machine-learning model which has been trained to recognize regions suitable for being excluded from sublayer-1 encoding on the basis of local statistics for the input video, such as image statistics, motion statistics, image content signatures etc. The image regions predicted by the trained machine-learning model can be utilized as non-motion regions 701 for the purposes of the present encoding method 600. In some implementations, step 610 may be carried out by an algorithm with a different purpose than detection of non-motion regions 701, such as a noise filter or an image-stabilization filter integrated in a video camera. Information indicating the presence of non-motion regions may be derivable from internal variables in any of these filters, from suitable output signals of the filters, or by comparing an input frame to the filter with a corresponding output frame. Further still, step 610 may be carried out by an algorithm related to inter-frame prediction coding, namely, an algorithm which determines on block level whether it is economical to encode the block predictively or not; if the algorithm assesses that it would be economical to encode the block predictively, that block may be treated as a non-motion region.

The detection of non-motion regions 701 may be applied to video frames of the input video at the original spatial resolution. Alternatively, the detection of non-motion regions 701 is applied to video frames of the input video at the intermediate spatial resolution. In that case the execution of step 610 cannot begin earlier than the subsequent step 620.

The sensitivity of the automatic detection algorithm (e.g., a tolerance within which pixel values are considered to be approximately unchanged between video frames) may be set by optimizing the total bitrate of the encoding method 600 for a representative test video while varying the detection sensitivity. A moderate frequency of so-called false positives is not a concern in itself, for if a region is incorrectly classified in step 610 as a non-moving one, that region will be excluded from the sublayer-1 correction because the first residuals vanish, but will eventually be corrected (possibly at a higher coding cost) in sublayer 2. Concretely, if a detected non-motion region of a video frame contains pixel-value variations (e.g., representing moving objects or lighting fluctuations), then the temporal prediction block 122 will decide not to use temporal prediction on that region, the region will instead be explicitly encoded, and the necessary enhancement will be realized by sublayer 2.

The execution flow of the method 600 proceeds to a step 620 of downsampling the input video from an original spatial resolution to a reduced spatial resolution and an intermediate spatial resolution. The input video at the reduced spatial resolution may be provided by downsampling the input video at the original spatial resolution twice, e.g., using a series of downscalers 130, 140 like in figure 1A, or directly from the input video at the original spatial resolution.

Within the scope of the present disclosure, each of the downscalers 130, 140 can be adapted for 2:2 downsampling of the input video (i.e., the width resolution is halved and the height resolution is halved), 2:1 downsampling of the input video (i.e., the resolution in the width direction of the video frames is halved and the resolution in the height direction of the video frames is maintained), 1:2 downsampling of the input video (i.e., the width resolution is maintained and the height resolution is halved), or 1:1 downsampling (i.e., the width resolution is maintained and the height resolution is maintained). The respective downsampling actions of the first and second downscalers 130, 140 can be chosen independently. In conventional implementations of LCEVC, the action of the first downscaler 130 is inverse to that of the second upscaler 120, and the action of the second downscaler 140 is inverse to that of the first upscaler 110. When the second downscaler 140 is configured as a passthrough block (for trivial downscaling 1:1), the spatial resolution of the base encoder 150 (corresponding to "reduced spatial resolution" in the claims) and spatial resolution of sublayer 1 (corresponding to "intermediate spatial resolution" in the claims) will be equal. With this configuration, sublayer 1 may help improve the output video's quality and/or the output video's fidelity with respect to the input video, but it does not change the spatial resolution. The upsampling carried out by the upscalers 110, 120 is described in section III of [1].

In a next step 630, the input video at the reduced spatial resolution is provided to a base encoder 150 to obtain a base encoded stream 180. It is emphasized that the base encoder 150 operates independently of the enhancement layers. Rather, the encoder 100 can be successfully implemented without any need to inspect or modify settings and internal variables of the base encoder 150.

In a next step 640, a first enhancement stream is provided. This includes a step 641 of generating a set of first residuals based on a difference between the input video and a reconstructed video at the intermediate spatial resolution. The difference may be computed by subtractor 111, which operates at the level of single pixels. In this example, the reconstructed video is obtained by decoding the base encoded stream and upsampling (or trivially upsampling) the output. The first residuals may be the difference without any further processing applied, or the first residuals may be transform coefficients obtained by applying a transform kernel to the difference. The size of the transform kernel may be adapted for 2 $\times$ 2 or 4 $\times$ 4 pixel blocks, and the output may be an equally sized coefficient block ("set of first residuals").

Step 640 further includes a step 642 of quantizing the set of first residuals (block 113 in figure 3) and a step 644 of forming the first enhancement stream from the set of quantized first residuals. Optionally, step 644 may include subjecting the set of quantized first residuals to entropy encoding. Suitable quantization and entropy-coding algorithms are described in sections VI and VII of [1].

According to the first group of embodiments, step 640 further includes a step 643 of applying masking to the set of quantized first residuals (block 302 in figure 3). Masking may include replacing those quantized first residuals which relate to the non-motion region with zero values (or equivalently, with neutral values that represent absence of image content). Conceptually, the 'mask' corresponds to the detected non-motion region. This will cause the set of first residuals to vanish throughout the non-motion region but leaves the first residuals outside the non-motion region intact. The replacement may be performed with a granularity of one set of first residuals, e.g. one transform block if transformation is used, or with the same granularity as was used in step 610 for the detection of the non-motion region.

In a next step 650, a second enhancement stream is provided. This includes a step 651 of generating a set of second residuals based on a difference between the input video and a reconstructed video at the original spatial resolution. Here, the reconstructed video at the original spatial resolution is obtained from the reconstructed video at the intermediate spatial resolution, namely, by adding a reconstruction of the first residuals and upsampling (or trivially upsampling) the output. The second residuals may be this difference without any further processing applied, or the second residuals may be transform coefficients obtained by applying a transform kernel to the difference. Like for the first residuals, the second residuals are subjected to quantization (step 652, block 124) before being included in the second enhancement stream (step 654, which may optionally include entropy-encoding, block 125). The quantization level to be used in step 652 can be configured in view of an expected noise level of the input video; for example, the quantization level (quantization step) can be set large enough that a significant part of noise artefacts in a nominally zero-valued signal are rounded to zero. The quantization level used in step 652 can be configured independently of the quantization level used in step 642; in this regard, the two sublayers of the enhancement encoder 100 are independent.

Common to all embodiments disclosed herein, the second enhancement stream is at least partially encoded using temporal prediction. The temporal-prediction encoding is partial in the sense that at least some blocks, some video frames or some subsequences of video frames in the input video 170 are encoded in this way. The second enhancement stream includes temporal signaling 193 which indicates with a suitable temporal and spatial granularity (e.g., for each predefined pixel/coefficient block in each video frame) whether the second residuals are encoded by temporal prediction, i.e. they are expressed by referring to one or more other video frames, or whether the second residuals are explicitly encoded. The temporal signaling 193 may be entropy-encoded before it is included as a temporal layer in the enhancement bitstream 190. The decision to encode explicitly or use temporal prediction (block 653 in figure 6) may be based on the degree of similarity with said one or more other video frames, e.g., whether the error that the use of temporal prediction introduces has an acceptable magnitude. The temporal prediction may operate at the level of:

a) the difference between the input video and a reconstructed video at the original spatial resolution,

b) coefficients obtained by applying a transform kernel to the difference,

c) a quantized difference, or

d) quantized coefficients.

Option a) has been chosen for some LCEVC implementations; see [2] and section IV in [1]. Option b) is discussed in [3]. Options c) and d) are covered by the flowchart in figure 6.

In a next step 660, after step 650 has been completed for a sequence of the input video, a corresponding segment of the hybrid video stream can be formed. The execution of the encoding method 600 may either end here or resume from the step 610 of detecting a non-motion region. The hybrid video stream can be decoded by a generic decoder which has not been modified in view of the teachings herein; this includes the standardized LCEVC decoder 200 in figure 2.

The above description is summarized by figure 3, which illustrates an LCEVC encoder 100 adapted in accordance with the first group of embodiments, where the set of first residuals vanish throughout the non-motion region as a result of masking applied to the set of quantized first residuals. Here, block 301 represents an algorithm operable to detect non-motion regions, corresponding to step 610. Block 302 represents the masking operation in step 643. Alternatively, the detection algorithm 301 may take its input from a point between the first downscaler 130 and second downscaler 140, whereby the detection is performed with the same spatial resolution as the masking.

It is noted that the present first group of embodiments has been described in a relatively complete and detailed way, including possible variations and alternatives, whereas the subsequent groups of embodiments will be discussed more concisely to avoid pointless repetition. It is appreciated that the technical features of the first group of embodiments, except those related to the masking 642 of the set of quantized first residuals, can be taken from this context and put to use in embodiments outside the first group.

## Second group of embodiments

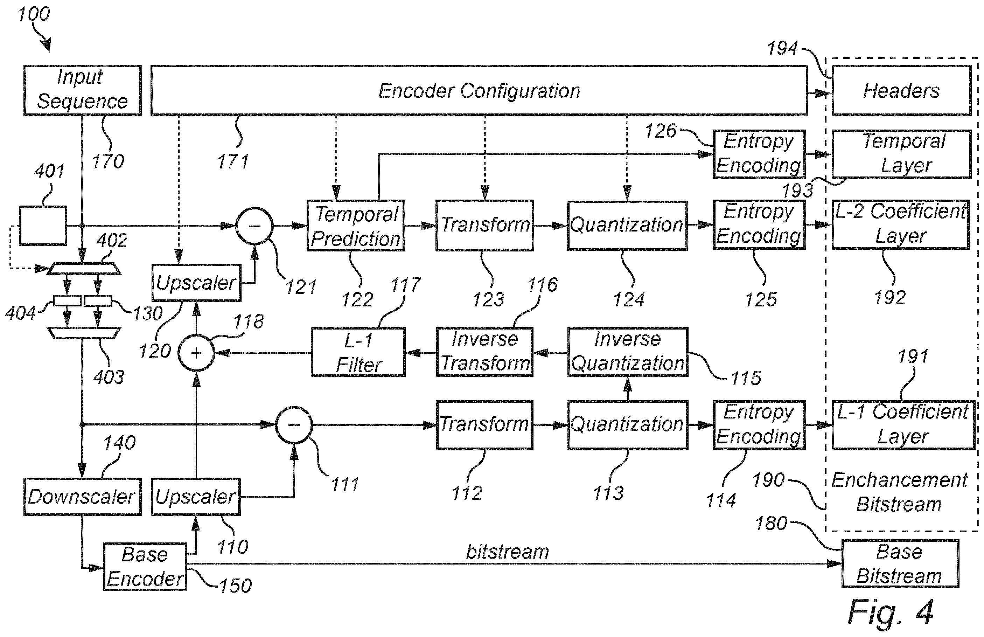

Figure 4 illustrates an LCEVC encoder 100 adapted in accordance with the second group of embodiments, where the set of first residuals vanish throughout the non-motion region as a result of replacing the input video at the intermediate spatial resolution with substitute video which has been upsampled from the input video at the reduced spatial resolution.

In a first step 610 of the method 600 illustrated in figure 6, at least one non-motion region is detected in a video frame (block 401 in figure 4). The detection may be carried out in one of the several ways that were described above in the context of the first group of embodiments.

Then, in a step 620, the input video is downsampled from an original spatial resolution to a reduced spatial resolution and to an intermediate spatial resolution. In the second group of embodiments, prior to generating 641 the set of first residuals, the input video at the intermediate spatial resolution is replaced throughout the non-motion region of the video frame with substitute video upsampled from the input video at the reduced spatial resolution. It may be considered that this amounts to providing (substep 620.1) a dual-resolution video frame in which the non-motion region has the reduced spatial resolution (albeit represented at the intermediate spatial resolution to allow processing, e.g., by the subtractor 111) and the remainder of the video frame has the intermediate spatial resolution. Hence, in a simple implementation where the upsampling operation does not include smooth interpolation, the dual-resolution video frame formally has the intermediate spatial resolution throughout, but the pixel values in the non-motion region vary with a granularity corresponding to the reduced spatial resolution, e.g., by blocks of $2\times2$ pixels.

Figure 4 shows an implementation where each frame of the input video is split (block 402), prior to any downsampling, into the at least one non-motion region on the one hand and the complement of the non-motion region on the other hand. The splitting may be guided by an output of the non-motion region detection algorithm symbolized by block 401. The complement undergoes downsampling to the intermediate spatial resolution (downsampler 130). The at least one non-motion region undergoes downsampling to the reduced spatial resolution, which is followed by upsampling to the intermediate resolution (block 404). The upsampling operation is preferably identical or equivalent to the upsampling operation that is applied to the reconstructed video (block 110). The at least one non-motion region and the complement thereof are then joined (block 403) into a video frame at the intermediate resolution. As a result of the operation in block 404, the information density in the at least one non-motion region may be expected to be lower than in the remainder of the video frame.

In an alternative implementation, the downsampling-upsampling block 404 is replaced by a block (not shown) which takes the output of the second downscaler 140, upsamples it and substitutes the upsampled data into the at least one non-motion region of a video frame.

In a next step 630, the input video at the reduced spatial resolution is provided to a base encoder 150 to obtain a base encoded stream 180.

In a next step 640, the first enhancement stream is provided, namely, by generating (step 641) a set of first residuals, quantizing (step 642) the set of first residuals and forming (step 644) the first enhancement stream from the set of quantized first residuals. Because the dual-resolution video frame is used in step 641, the set of first residuals for the non-motion region will be generated based on a difference between, on the one hand, the input video at the reduced spatial resolution (though nominally upsampled to the intermediate spatial resolution) and, on the other hand, a reconstructed video at the intermediate spatial resolution. Outside the non-motion region, the set of first residuals is generated based on a difference between the input video and a reconstructed video at the intermediate spatial resolution. In this way, the set of first residuals is zero or approximately zero (i.e., vanishes) throughout the non-motion region, and the correction is deferred to the next sublayer of the enhancement encoder 100.

In a next step 650, the second enhancement stream is provided, namely, by generating (step 651) a set of second residuals based on a difference between the input video and a reconstructed video at the original spatial resolution, quantizing said second residuals (step 652) and including them in the second enhancement stream (step 654). The second enhancement stream is at least partially encoded using temporal prediction, as decided in step 653.

In a next step 660, after step 650 has been completed for a sequence of the input video, a corresponding segment of the hybrid video stream can be formed. The execution of the encoding method 600 may either end or resume from the step 610 of detecting a non-motion region.

## Third group of embodiments

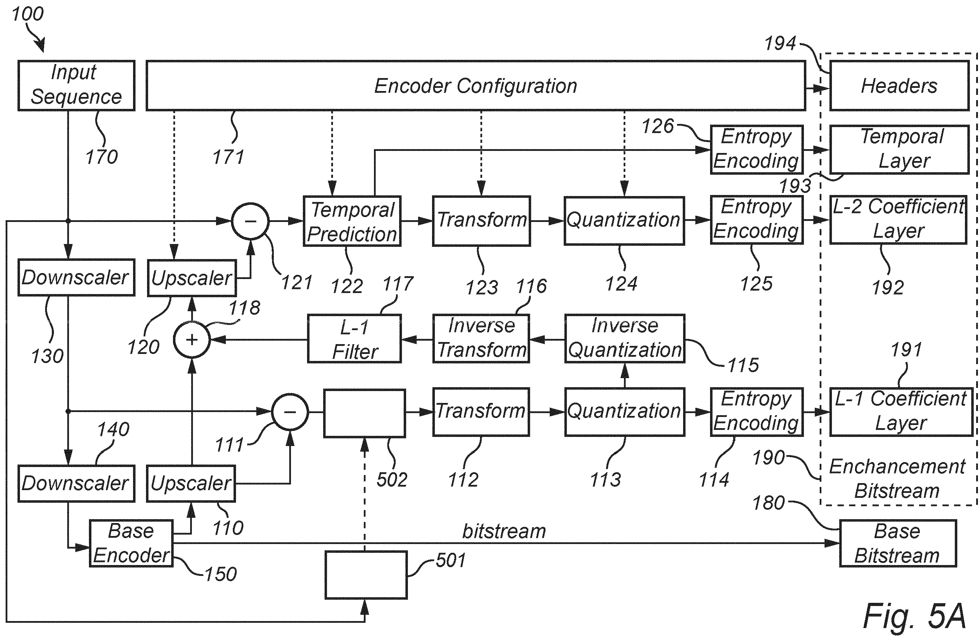

Figure 5A illustrates an LCEVC encoder 100 adapted in accordance with the third group of embodiments, where the set of first residuals vanish throughout the non-motion region as a result of applying masking to the difference between the input video and a reconstructed video at the intermediate spatial resolution. In some embodiments the set of first residuals constitutes said difference, while in other embodiments the set of first residuals are transform coefficients computed from the difference. The third group further comprises embodiments where masking is applied to a set of first residuals which are transform coefficients; similar to the embodiment depicted in figure 5A, the masking is applied prior to the quantizing of the set of first residuals, downstream of block 112.

In a first step 610 of the method 600 illustrated in figure 6, at least one non-motion region is detected in a video frame (block 501 in figure 5A). The detection may be carried out in one of the several ways that were described above in the context of the first group of embodiments.

Then, in a step 620, the input video is downsampled from an original spatial resolution to a reduced spatial resolution and an intermediate spatial resolution.

In a next step 630, the input video at the reduced spatial resolution is provided to a base encoder 150 to obtain a base encoded stream 180.

In a next step 640, the first enhancement stream is provided, namely, by generating (step 641) a set of first residuals, quantizing (step 642) the set of first residuals and forming (step 644) the first enhancement stream from the set of quantized first residuals.

According to some embodiments in the third group, step 641 includes a substep 641.1 (block 502) of applying masking to the difference between the input video and a reconstructed video at the intermediate spatial resolution. Masking may include replacing those values of the difference which relate to the non-motion region with zero values (or equivalently, with neutral values that represent absence of image content). Conceptually, the 'mask' corresponds to the non-motion region. According to other embodiments in the third group, where the first residuals are transform coefficients, substep 641.1 includes applying such masking to the set of first residuals prior to the quantization (step 642, block 113). In this case, which may correspond to placing block 502 between blocks 112 and 113, the masking may be applied to all transform blocks that are derived wholly from pixels in the non-motion region. The masking may optionally be applied to all transform blocks that are derived wholly or partly from pixels in the non-motion region. Either way, the correction of the non-motion region(s) will be deferred to the second sublayer of the enhancement encoder 100.

In a next step 650, the second enhancement stream is provided, namely, by generating (step 651) a set of second residuals based on a difference between the input video and a reconstructed video at the original spatial resolution, quantizing said second residuals (step 652) and including them in the second enhancement stream (step 654). The second enhancement stream is at least partially encoded using temporal prediction, as decided in step 653.

In a next step 660, after step 650 has been completed for a sequence of the input video, a corresponding segment of the hybrid video stream can be formed. The execution of the encoding method 600 may either end or resume from the step 610 of detecting a non-motion region.

## Fourth group of embodiments

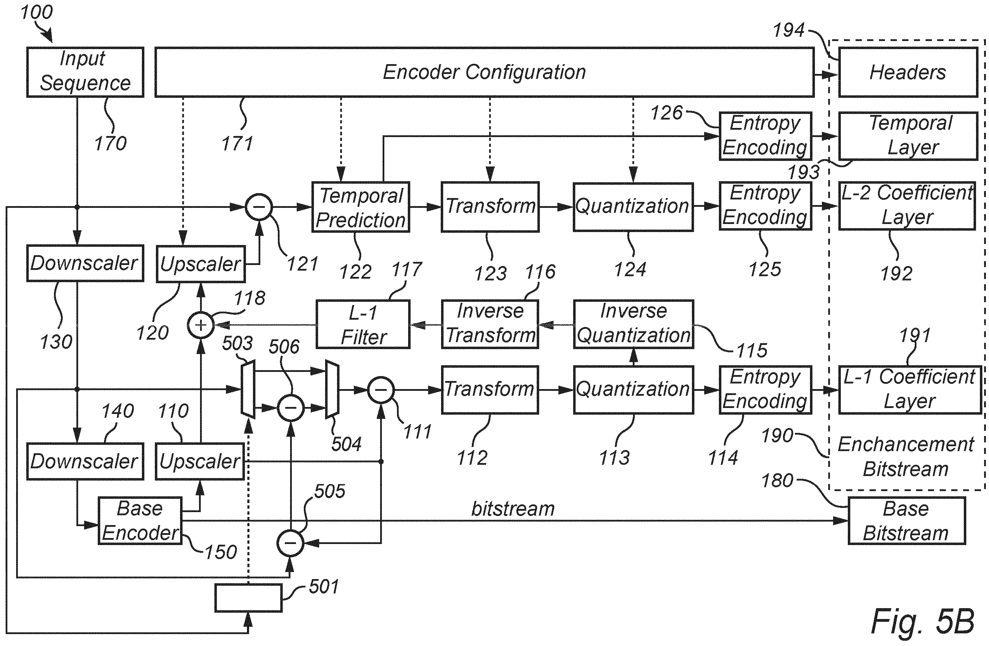

Figure 5B illustrates an LCEVC encoder 100 adapted in accordance with the fourth group of embodiments, where the set of first residuals vanish throughout the non-motion region as a result of subtracting from the input video, prior to generating the set of first residuals, a predicted difference between the input video and the reconstructed video at the intermediate spatial resolution. Outside the non-motion region, the set of first residuals are generated in the regular way, i.e., based on the difference between the input video and a reconstructed video at the intermediate spatial resolution.

In a first step 610 of the method 600 illustrated in figure 6, at least one non-motion region is detected in a video frame (block 501 in figure 5B). The detection may be carried out in one of the several ways that were described above in the context of the first group of embodiments.

Then, in a step 620, the input video is downsampled from an original spatial resolution to a reduced spatial resolution and an intermediate spatial resolution.

In a next step 630, the input video at the reduced spatial resolution is provided to a base encoder 150 to obtain a base encoded stream 180.

In a next step 640, the first enhancement stream is provided, namely, by generating (step 641) a set of first residuals, quantizing (step 642) the set of first residuals and forming (step 644) the first enhancement stream from the set of quantized first residuals.

According to embodiments in the fourth group, in a step 635, a difference between the input video and the reconstructed video at the intermediate spatial resolution is predicted and subtracted from the non-motion region(s) of each video frame of the input video. The predicted difference can be considered to be a prediction of the output of the subtractor 111. The subtraction is carried out before the first residuals are generated (step 641). Figure 5B shows one possible implementation which achieves this subtraction. Here, a subtractor 505 subtracts the output of the first upscaler 110 (i.e., reconstructed video at the intermediate spatial resolution) from the output of the first downscaler 130 (i.e., input video downsampled to the intermediate spatial resolution). A block 503 splits the non-motion region(s) from the remainder of the video frame and a block 506 subtracts the output of the subtractor 505 from this, upon which a block 504 joins the non-motion region(s) and the remainder, and feeds the output into the subtractor 111. As a result, the difference which is the output of the subtractor 111 will be zero or approximately zero (i.e., vanish) in the non-motion region:

$$\begin{aligned} &((\text{input video at intermediate resolution}) - (\text{predicted difference})) \\ &- (\text{reconstructed video at intermediate resolution}) \\ &= ((\text{input video at intermediate resolution}) - ((\text{input video at intermediate resolution}) - (\text{reconstructed video at intermediate resolution}))) \\ &- (\text{reconstructed video at intermediate resolution}) \\ &= 0. \end{aligned}$$

This way, the correction of the non-motion region will be deferred to the second sublayer of the enhancement encoder 100. The remainder of the video frame will be processed normally, that is, both in sublayer 1 and sublayer 2.

In a next step 650, the second enhancement stream is provided, namely, by generating (step 651) a set of second residuals based on a difference between the input video and a reconstructed video at the original spatial resolution, quantizing said second residuals (step 652) and including them in the second enhancement stream (step 654). The second enhancement stream is at least partially encoded using temporal prediction, as decided in step 653.

In a next step 660, after step 650 has been completed for a sequence of the input video, a corresponding segment of the hybrid video stream can be formed. The execution of the encoding method 600 may either end or resume from the step 610 of detecting a non-motion region.

### Closing remarks

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

### Claims

1. A method (600) of encoding an input video (170) including a sequence of video frames as a hybrid video stream, wherein the method comprises:

   downsampling (620) the input video from an original spatial resolution to a reduced spatial resolution and an intermediate spatial resolution;
   providing (630) the input video at the reduced spatial resolution to a base encoder (150) to obtain a base encoded stream (180);
   providing (640) a first enhancement stream by

   generating (641) a set of first residuals based on a difference between the input video at the intermediate spatial resolution and a reconstructed video at the intermediate spatial resolution;
   quantizing (642) the set of first residuals; and
   forming (644) the first enhancement stream from the set of quantized first residuals (191);

providing (650) a second enhancement stream by

generating (651) a set of second residuals based on a difference between the input video at the original spatial resolution and a reconstructed video at the original spatial resolution;
quantizing (652) the set of second residuals; and
forming (654) the second enhancement stream from the set of quantized second residuals (192), wherein the second enhancement stream is at least partially encoded using temporal prediction and further comprises temporal signaling (193) indicating whether temporal prediction is used;

forming (660) the hybrid video stream from the base encoded stream (180), the first enhancement stream (191) and the second enhancement stream (192, 193),
**characterized in that** the method further comprises:

detecting (610) at least one non-motion region (701) in a video frame; and
causing the set of first residuals but not the set of second residuals to be reduced to zero or approximately zero throughout the non-motion region.

2. The method of claim 1, wherein the set of first residuals is caused to be reduced to zero or approximately zero throughout the non-motion region by applying masking (643) to the set of quantized first residuals.

3. The method of claim 1, wherein the set of first residuals is caused to be reduced to zero or approximately zero throughout the non-motion region by:
in the non-motion region of the video frame, prior to generating (641) the set of first residuals, replacing the input video at the intermediate spatial resolution with substitute video upsampled from the input video at the reduced spatial resolution.

4. The method of claim 3, wherein downsampling (620) the input video comprises:
providing (620.1) a dual-resolution video frame having the reduced spatial resolution in the non-motion region and the intermediate spatial resolution elsewhere.

5. The method of claim 1, wherein the set of first residuals is caused to be reduced to zero or approximately zero throughout the non-motion region by applying masking (641.1) to the difference between the input video at the intermediate spatial resolution and a reconstructed video at the intermediate spatial resolution or by applying masking to the set of first residuals prior to the quantizing (642).

6. The method of claim 1, wherein the set of first residuals is caused to be reduced to zero or approximately zero throughout the non-motion region by: in the non-motion region of the video frame, subtracting (635) from the input video, prior to generating (641) the set of first residuals, a predicted difference between the input video at the intermediate spatial resolution and the reconstructed video at the intermediate spatial resolution.

7. The method of any of the preceding claims, wherein each video frame of the first enhancement stream is decodable without reference to any other video frame of the first enhancement stream.

8. The method of any of the preceding claims, wherein providing (650) the second enhancement stream further comprises determining (653), for each set of second residuals or quantized second residuals in a video frame, whether to use temporal prediction with reference to one or more other video frames, and indicating by the temporal signaling (193) whether temporal prediction is used in said video frame.

9. The method of any of the preceding claims, wherein the at least one non-motion region is detected (610) in a video frame of the input video at the original spatial resolution or in a video frame of the input video at the intermediate spatial resolution.

10. The method of any of the preceding claims, wherein the intermediate spatial resolution is finer than the reduced spatial resolution, or the intermediate and reduced spatial resolutions are equal.

11. The method of any of the preceding claims, wherein the first and/or the second residuals are generated (641, 651) by applying a transform kernel of size $2 \times 2$ pixels or $4 \times 4$ pixels to the difference between the input video and the reconstructed video.

12. The method of claim 11, wherein the transform kernel is a Low-Complexity Enhancement Video Coding, LCEVC, transform kernel.

13. The method of any of the preceding claims, wherein the set of first residuals and the set of second residuals are quantized using different levels of quantization.

14. A device (800) comprising processing circuitry (810) arranged to perform the method (600) of any of claims 1 to 13.

15. A computer program (821) comprising instructions which, when the program is executed by processing circuitry (810), cause the processing circuitry to carry out the method (600) of any of claims 1 to 13.


**Patentansprüche**

1. Verfahren (600) des Codierens eines Eingabevideos (170), das eine Sequenz von Videoframes beinhaltet, als ein Hybrid-Videostream, wobei das Verfahren umfasst:

Runterabtasten (620) des Eingabevideos von einer ursprünglichen räumlichen Auflösung auf eine reduzierte räumliche Auflösung und eine zwischenliegende räumliche Auflösung;
Zuführen (630) des Eingabevideos bei der reduzierten räumlichen Auflösung zu einem Basiscodierer (150), um einen codierten Basisstream (180) zu erhalten;
Bereitstellen (640) eines ersten Erweiterungsstreams durch
Erzeugen (641) eines Satzes von ersten Resten auf der Grundlage von einer Differenz zwischen dem Eingabevideo bei der zwischenliegenden räumlichen Auflösung und einem rekonstruierten Video bei der zwischenliegenden räumlichen Auflösung;
Quantisieren (642) des Satzes von ersten Resten; und
Bilden (644) des ersten Erweiterungsstreams aus dem Satz von quantisierten ersten Resten (191);
Bereitstellen (650) eines zweiten Erweiterungsstreams durch Erzeugen (651) eines Satzes von zweiten Resten auf der Grundlage von einer Differenz zwischen dem Eingabevideo bei der ursprünglichen räumlichen Auflösung und einem rekonstruierten Video bei der ursprünglichen räumlichen Auflösung;
Quantisieren (652) des Satzes von zweiten Resten; und
Bilden (654) des zweiten Erweiterungsstreams aus dem Satz von quantisierten zweiten Resten (192),
wobei der zweite Erweiterungsstream zumindest teilweise unter Verwendung von zeitlicher Prädiktion codiert wird und ferner zeitliche Signalisierung (193) umfasst,
die angibt, ob zeitliche Prädiktion verwendet wird;
Bilden (660) des Hybrid-Videostreams aus dem codierten Basisstream (180), dem ersten Erweiterungsstream (191) und dem zweiten Erweiterungsstream (192, 193),
**dadurch gekennzeichnet, dass** das Verfahren ferner umfasst:

Detektieren (610) mindestens einer Nichtbewegungsregion (701) in einem Videoframe; und
Bewirken, dass der Satz von ersten Resten aber nicht der Satz von zweiten Resten über die Nichtbewegungsregion hinweg auf null oder ungefähr null reduziert wird.

2. Verfahren nach Anspruch 1, wobei bewirkt wird, dass der Satz von ersten Resten über die Nichtbewegungsregion hinweg auf null oder ungefähr null reduziert wird, indem Maskierung (643) auf den Satz von quantisierten ersten Resten angewandt wird.

3. Verfahren nach Anspruch 1, wobei bewirkt wird, dass der Satz von ersten Resten über die Nichtbewegungsregion hinweg auf null oder ungefähr null reduziert wird, durch:
in der Nichtbewegungsregion des Videoframes, vor dem Erzeugen (641) des Satzes von ersten Resten, Ersetzen des Eingabevideos bei der zwischenliegenden räumlichen Auflösung mit Ersatzvideo, das von dem Eingabevideo bei der reduzierten räumlichen Auflösung hochabgetastet wurde.

4. Verfahren nach Anspruch 3, wobei Runterabtasten (620) des Eingabevideos Folgendes umfasst:
Liefern (620.1) eines Zweiauflösung-Videoframes, der die reduzierte räumliche Auflösung in der Nichtbewegungsregion und die zwischenliegende räumliche Auflösung sonst aufweist.

5. Verfahren nach Anspruch 1, wobei bewirkt wird, dass der Satz von ersten Resten über die Nichtbewegungsregion hinweg auf null oder ungefähr null reduziert wird, indem Maskierung (641.1) angewandt wird auf die Differenz zwischen dem Eingabevideo bei der zwischenliegenden räumlichen Auflösung und einem rekonstruierten Video bei der zwischenliegenden räumlichen Auflösung oder indem Maskierung vor dem Quantisieren auf den Satz von ersten Resten angewandt wird (642).

6. Verfahren nach Anspruch 1, wobei bewirkt wird, dass der Satz von ersten Resten über die Nichtbewegungsregion hinweg auf null oder ungefähr null reduziert wird, durch:

in der Nichtbewegungsregion des Videoframes, Subtrahieren (635) von dem Eingabevideo, vor dem Erzeugen (641) des Satzes von ersten Resten, einer vorhergesagten Differenz zwischen dem Eingabevideo bei der zwischenliegenden räumlichen Auflösung
und dem rekonstruierten Video bei der zwischenliegenden räumlichen Auflösung.

7. Verfahren nach einem der vorhergehenden Ansprüche, wobei jeder Videoframe des ersten Erweiterungsstreams ohne Bezugnahme auf irgendeinen anderen Videoframe des ersten Erweiterungsstreams decodierbar ist.

8. Verfahren nach einem der vorhergehenden Ansprüche, wobei Bereitstellen (650) des zweiten Erweiterungsstreams ferner umfasst: Bestimmen (653), für jeden Satz von zweiten Resten oder quantisierten zweiten Resten in einem Videoframe, ob zeitliche Prädiktion mit Bezug auf einen oder mehrere andere Videoframes verwendet werden soll, und Angeben durch die zeitliche Signalisierung (193), ob zeitliche Prädiktion in dem Videoframe verwendet wird.

9. Verfahren nach einem der vorhergehenden Ansprüche, wobei die mindestens eine Nichtbewegungsregion detektiert wird (610) in einem Videoframe des Eingabevideos bei der ursprünglichen räumlichen Auflösung oder in einem Videoframe des Eingabevideos bei der zwischenliegenden räumlichen Auflösung.

10. Verfahren nach einem der vorhergehenden Ansprüche, wobei die zwischenliegende räumliche Auflösung feiner als die reduzierte räumliche Auflösung ist oder die zwischenliegende und die reduzierte räumliche Auflösung gleich sind.

11. Verfahren nach einem der vorhergehenden Ansprüche, wobei die ersten und/oder die zweiten Reste erzeugt werden (641, 651) durch Anwenden eines Transformationskernels der Größe 2 x 2 Pixel oder 4 x 4 Pixel auf die Differenz zwischen dem Eingabevideo und dem rekonstruierten Video.

12. Verfahren nach Anspruch 11, wobei der Transformationskernel ein Transformationskernel für Low-Complexity Enhancement Video Coding, LCEVC, ist.

13. Verfahren nach einem der vorhergehenden Ansprüche, wobei der Satz von ersten Resten und der Satz von zweiten Resten unter Verwendung verschiedener Quantisierungspegel quantisiert werden.

14. Vorrichtung (800), die eine Verarbeitungsschaltungsanordnung (810) umfasst, die eingerichtet ist zum Durchführen des Verfahrens (600) nach einem der Ansprüche 1 bis 13.

15. Computerprogramm (821), das Anweisungen umfasst, die, wenn das Programm durch die Verarbeitungsschaltungsanordnung (810) ausgeführt wird, die Verarbeitungsschaltungsanordnung veranlasst zum Ausführen des Verfahrens (600) nach einem der Ansprüche 1 bis 13.

**Revendications**

1. Procédé (600) de codage d'une vidéo (170) d'entrée comprenant une séquence de trames vidéo sous la forme d'un flux vidéo hybride, le procédé comprenant :

le sous-échantillonnage (620) de la vidéo d'entrée d'une résolution spatiale d'origine vers une résolution spatiale réduite et une résolution spatiale intermédiaire;
la fourniture (630) de la vidéo d'entrée à la résolution spatiale réduite à un codeur (150) de base pour obtenir un flux codé (180) de base ;
la fourniture (640) d'un premier flux d'amélioration par la génération (641) d'un ensemble de premiers résidus sur la base d'une différence entre la vidéo d'entrée à la résolution spatiale intermédiaire et une vidéo reconstruite à la résolution spatiale intermédiaire ;

la quantification (642) de l'ensemble de premiers résidus ; et

la formation (644) du premier flux d'amélioration à partir de l'ensemble de premiers résidus quantifiés (191);

la fourniture (650) d'un second flux d'amélioration par la génération (651) d'un ensemble de seconds résidus sur la base d'une différence entre la vidéo d'entrée à la résolution spatiale d'origine et une vidéo reconstruite à la résolution spatiale d'origine ;

la quantification (652) de l'ensemble de seconds résidus ; et

la formation (654) du second flux d'amélioration à partir de l'ensemble de seconds résidus quantifiés (192), le deuxième flux d'amélioration étant au moins partiellement codé à l'aide d'une prédiction temporelle et comprenant en outre une signalisation temporelle (193) indiquant si une prédiction temporelle est utilisée ;

la formation (660) du flux vidéo hybride à partir du flux codé (180) de base, du premier flux (191) d'amélioration et du second flux (192, 193) d'amélioration,

**caractérisé en ce que** le procédé comprend en outre :

la détection (610) d'au moins une région (701) de non-mouvement dans une trame vidéo ; et

le fait d'amener l'ensemble des premiers résidus, mais pas l'ensemble des seconds résidus, à être réduit à zéro ou approximativement à zéro dans toute la région de non-mouvement.

2. Procédé selon la revendication 1, l'ensemble de premiers résidus étant amené à être réduit à zéro ou approximativement à zéro dans toute la région de non-mouvement en appliquant un masquage (643) à l'ensemble de premiers résidus quantifiés.

3. Procédé selon la revendication 1, l'ensemble de premiers résidus étant amené à être réduit à zéro ou approximativement à zéro dans toute la région de non mouvement par :

dans la région de non-mouvement de la trame vidéo, avant de générer (641) l'ensemble de premiers résidus, remplacement de la vidéo d'entrée à la résolution spatiale intermédiaire par une vidéo de substitution suréchantillonnée à partir de la vidéo d'entrée à la résolution spatiale réduite.

4. Procédé selon la revendication 3, le sous-échantillonnage (620) de la vidéo d'entrée comprenant : la fourniture (620.1) d'une trame vidéo à double résolution présentant la résolution spatiale réduite dans la région de non-mouvement et la résolution spatiale intermédiaire ailleurs.

5. Procédé selon la revendication 1, l'ensemble de premiers résidus étant amené à être réduit à zéro ou approximativement à zéro dans toute la région de non-mouvement par application d'un masquage (641.1) à la différence entre la vidéo d'entrée à la résolution spatiale intermédiaire et une vidéo reconstruite à la résolution spatiale intermédiaire ou par application d'un masquage à l'ensemble de premiers résidus avant la quantification (642).

6. Procédé selon la revendication 1, l'ensemble de premiers résidus étant amené à être réduit à zéro ou approximativement à zéro dans toute la région de non mouvement par :
dans la région non animée de la trame vidéo, soustraction (635) à la vidéo d'entrée, avant de générer (641) l'ensemble de premiers résidus, d'une différence prédite entre la vidéo d'entrée à la résolution spatiale intermédiaire et la vidéo reconstruite à la résolution spatiale intermédiaire.

7. Procédé selon l'une quelconque des revendications précédentes, chaque trame vidéo du premier flux d'amélioration pouvant être décodée sans se référer à aucune autre trame vidéo du premier flux d'amélioration.

8. Procédé selon l'une quelconque des revendications précédentes, la fourniture (650) du second flux d'amélioration comprenant en outre le fait de déterminer (653), pour chaque ensemble de seconds résidus ou de seconds résidus quantifiés dans une trame vidéo, s'il convient d'utiliser la prédiction temporelle en se référant à une ou plusieurs autres trames vidéo, et le fait d'indiquer par la signalisation temporelle (193) si la prédiction temporelle est utilisée dans ladite trame vidéo.

9. Procédé selon l'une quelconque des revendications précédentes, la ou les régions de non-mouvement étant détectées (610) dans une trame vidéo de la vidéo d'entrée à la résolution spatiale d'origine ou dans une trame vidéo de la vidéo d'entrée à la résolution spatiale intermédiaire.

10. Procédé selon l'une quelconque des revendications précédentes, la résolution spatiale intermédiaire étant plus fine que la résolution spatiale réduite, ou les résolutions spatiale intermédiaire et réduite étant égales.

11. Procédé selon l'une quelconque des revendications précédentes, les premiers et/ou les seconds résidus étant générés (641, 651) en appliquant un noyau de transformation de taille 2 x 2 pixels ou 4 x 4 pixels à la différence entre la vidéo d'entrée et la vidéo reconstruite.

12. Procédé selon la revendication 11, dans lequel le noyau de transformation étant un noyau de transformation pour codage vidéo d'amélioration de faible complexité, LCEVC.

13. Procédé selon l'une quelconque des revendications précédentes, l'ensemble de premiers résidus et l'ensemble de seconds résidus étant quantifiés en utilisant des niveaux de quantification différents.

14. Dispositif (800) comprenant une circuiterie (810) de traitement agencée pour réaliser le procédé (600) selon l'une quelconque des revendications 1 à 13.

15. Programme informatique (821) comprenant des instructions qui, lorsque le programme est exécuté par une circuiterie (810) de traitement, amènent la circuiterie de traitement à réaliser le procédé (600) selon l'une quelconque des revendications 1 à 13.

Fig. 1A

*Fig. 1B*

*Fig. 1C*

Fig. 2

EP 4 468 703 B1

Fig. 3

Fig. 4

EP 4 468 703 B1

Fig. 5A

Fig. 5B

EP 4 468 703 B1

*Fig. 6*

Fig. 7

*Fig. 8*

*Fig. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020188273 A1

### Non-patent literature cited in the description

- **S. BATTISTA et al.** Overview of the Low Complexity Enhancement Video Coding (LCEVC) Standard. *IEEE Transactions on Circuits and Systems for Video Technology*, 2022, vol. 32 (11), 7983-7995
- White paper on Low Complexity Enhancement Video Coding (LCEVC). *ISO/IEC JTC1/SC29/AG3 N0058*, January 2022
- ISO/IEC 23094-2-Information Technology-General Video Coding-Part 2: Low Complexity Enhancement Video Coding. *Standard ISO/IEC 23094-2:2021*, November 2021
- ISO/IEC 23094-3-Information Technology-General Video Coding-Part 3: Conformance and Reference Software for Low Complexity Enhancement Video Coding. *Standard ISO/IEC 23094-3:2021*, 2022